# EUROPÄISCHE PATENTSCHRIFT

(11) **EP 3 708 645 B1**
(45) Veröffentlichungstag und Bekanntmachung des Hinweises auf die Patenterteilung: **26.07.2023**
(21) Anmeldenummer: 20163249.4
(22) Anmeldetag: 16.03.2020
(51) Int. Cl.: C12H 1/07, C12C 7/16, C12C 13/10

(54) **BRAUANLAGE**
BREWING SYSTEM
INSTALLATION DE BRASSAGE

(30) Priorität: 14.03.2019 EP 19162855
(43) Veröffentlichungstag der Anmeldung: 16.09.2020
(73) Patentinhaber: HUBL GmbH Edelstahltechnik, 71665 Vaihingen/Enz (DE)
(72) Erfinder: KIEFER, Rainer, 71254 Ditzingen (DE)
(74) Vertreter: Jeck, Anton

(56) Entgegenhaltungen:
- US-A- 4 494 451
- US-A1- 2016 208 205
- US-B1- 8 993 273
- C. Bamforth: "Brewing: new technologies", 9. August 2006 (2006-08-09), Elsevier Science & Technology, XP002793488, * Seite 223 - Seite 224; Abbildung 10.3 * * Seite 383, Absatz 3 *

## Beschreibung

Die vorliegende Erfindung betrifft eine mobile Brauanlage gemäß dem Oberbegriff des Anspruchs 1 sowie ein Verfahren nach dem Anspruch 9.

Bei einer solchen Braunlage sind vorzugsweise 2 Aufnahmebehälter für Brauflüssigkeiten vorgesehen, welche miteinander unterbrechbar fluidisch verbunden sind, wobei mindestens der erste Aufnahmebehälter eine Heizeinrichtung aufweist und der zweite Aufnahmebehälter mit einem Sieb bereitgestellt ist.

Ein Brauprozess, insbesondere für Bier, kann grundsätzlich in vier Schritte unterteilt werden: 1. Maischen, 2. Läutern, 3. Kochen der Würze und 4. Gärung.

Es sind hinlänglich Brauanlagen bekannt, bei denen diese einzelnen Schritte in unterschiedlichen Einrichtungen durchgeführt werden. Bei diesen Brauanlagen handelt es sich jedoch grundsätzlich um statische Braueinrichtungen, welche keine Rücksicht auf den Platzbedarf nehmen müssen.

Die US 4,494,451 betrifft eine Brauanlage mit insgesamt drei Aufnahmebehälter. Es ist ein komplexes Rohrleitungs- und Pumpensystem vorgesehen, welches ausgebildet ist, die Brauflüssigkeit zwischen den einzelnen Aufnahmebehälter nach festgelegten Notwendigkeiten hin und her zubewegen. Eine Rückführung von filtrierter Flüssigkeit aus einem Sammelbehälter direkt zurück in den Aufnahmebehälter, in welchem die Filtration durchgeführt wird, ist nicht vorgesehen.

Die US 8,993,273 betrifft eine Brauanlage mit zwei Aufnahmebehältern. Diese sind durch zwei Rohrleitungen verbunden, wobei an der einen Rohrleitung ein Ventil 41 zur Regulierung des Abflusses von Filterflüssigkeit aus dem zweiten Aufnahmebehälter in den ersten Aufnahmebehälter vorgesehen ist. Eine direkte Rücklaufleitung aus einem Bereich des zweiten Aufnahmebehälters 24 nach dem Sieb 39 oder aus der Leitung 48 zurück in einen Bereich des zweiten Aufnahmebehälters 24 vor dem Sieb 39 ist nicht vorgesehen.

Die US 2016/0208205 offenbart eine Brauanlage mit einem Reaktor, in welchem alle Verfahrensschritte durchgeführt werden. Zur Zwischenlagerung der Brauflüssigkeit ist ein Tank 30 vorgesehen, in welchem die Brauflüssigkeit nach der Filtration zur Reinigungszwecken des Reaktors zwischengelagert werden kann. Ein Sammelbehälter, welcher zwischen einem Ablauf eines Filtrationsbehälters und einem Zulauf des selbigen vorgesehen ist geht aus der US 2016/0208205 ebenfalls nicht hervor.

Nach der vorliegenden Erfindung wird ein Brauanlagenkonzept bereitgestellt, mittels welchem der Brauvorgang auf geringem Raum bereitstellbar ist. Die kompakte Konzeption der erfindungsgemäßen Brauanlage kann dazu beitragen, eine Brauanlage bereitzustellen, welche ohne Umbaumaßnahmen transportierbar und grundsätzlich auch während des Transports betriebsbereit ist. Davon ausgenommen können sein der Zufluss von Wasser und die notwendige Energie (Elektrizität), um die mobile Brauanlage zu betreiben.

Ein wesentlicher Aspekt der vorliegenden Erfindung kann darin bestehen, dass die einzelnen Schritte des Brauprozesses lediglich unter Zuhilfenahme von zwei Aufnahmebehältern für Brauflüssigkeit durchführbar sind. Anstatt jedes der einzelnen Brauschritte in einem separaten Aufnahmebehälter durchzuführen, kann erfindungsgemäß durch das Fördern zwischen zwei Aufnahmebehältern der jeweils übernächste Verfahrensschritt in demselben Aufnahmebehälter durchgeführt werden. Um dies zu ermöglichen, kann es erforderlich sein, Zwischenschritte zwischen den einzelnen Braustufen mit nur einem Aufnahmebehälter zu verwirklichen (z. B. Vorlauf beim Läutern).

Die **Aufgabe,** eine entsprechend kompakte Brauanlage bereitzustellen, wird nach der vorliegenden Erfindung durch eine mobile Brauanlage mit den Merkmalen des kennzeichnenden Teils gelöst. Diese sind:
- dass dem zweiten Aufnahmebehälter ein diskreter, Sammelbehälter für filtrierte Flüssigkeit aus dem Sieb nachgeschaltet ist, welcher mit dem zweiten Aufnahmebehälter über eine Leitung fluidisch verbunden ist,
- dass zwischen dem zweitem Aufnahmebehälter und dem Sammelbehälter ein Durchflussregler bereitgestellt ist, mittels welchem eine Zuflussgeschwindigkeit von Flüssigkeit zu dem Sammelbehälter einstellbar und/oder unterbrechbar ist,
- dass der Sammelbehälter mit einer Ablaufleitung für Flüssigkeit verbunden ist, über welche direkt, also an dem ersten Aufnahmebehälter vorbei, Flüssigkeit aus dem Sammelbehälter in einen dem Sieb vorgeschalteten Bereich des zweiten Aufnahmebehälters rückführbar ist

Demnach kann erfindungsgemäß durch eine Rezirkulation von filtrierter Flüssigkeit zwischen Einlauf und Auslauf des zweiten Aufnahmebehälters eine Behandlung des Vorlaufs ermöglicht sein, ohne ein Behältnis für den gesamten Vorlauf des Läuterprozesses bereitstellen zu müssen.

Der Sammelbehälter kann dabei als in sich abgeschlossene Einheit vorliegen und/oder der Größe nach an das Volumen der zweiten Aufnahmebehälters, also das Volumen eines entsprechenden Vorlaufs, angepasst sein. Die Anpassung kann insbesondere darin liegen, dass der Sammelbehälter ein Volumen aufweist, welches geringer ist als der Vorlauf aus dem zweiten Aufnahmebehälter. Der Vorlauf ist anhängig vom Volumen des zweiten Aufnahmebehälters und beträgt üblicherweise zwischen 3 % und 20 % des Gesamtvolumens an Flüssigkeit im zweiten Aufnahmebehälter vor Beginn der Filtration. Der Sammelbehälter kann vorzugsweise ein Volumen aufweisen, das zwischen 1/20 und ¼ des Vorlaufvolumens entspricht.

Besonders bevorzugt weist der Sammelbehälter ein Volumen auf, welches zwischen 1/20 und 1/10 oder auch 1/5 des Volumens des zweiten Aufnahmebehälters entspricht.

Der Sammelbehälter kann trotz seines in sich geschlossenen Aufbaus mit einer Zulaufleitung aus dem zweiten Aufnahmebehälter und einer Ablaufleitung aus dem Sammelbehälter, insbesondere zurück in den zweiten Aufnahmebehälter, verbunden sein, über welches Filtrat in den Sammelbehälter gelangt bzw. aus diesem abführbar ist.

Nach der vorliegenden Erfindung wurde erkannt, dass es für die Qualität des Endprodukts vorteilhaft ist, wenn der Vorlauf in einer kontrollierten Atmosphäre vorliegt, bis die Filtration abgeschlossen, also ein maßgeblicher Teil der Schwebstoffe von der Flüssigkeit abgetrennt sein kann.

Daher können vorteilhafter weise Abdeckungen für die Aufnahmebehälter vorgesehen sein, welche diese gegenüber der Atmosphäre Luftdicht abschließen.

Der erfindungsgemäße, in sich abgeschlossene Sammelbehälter ermöglicht also durch das Bereitstellen einer kontrollierten Atmosphäre den Erhalt eines qualitativ besonders hochwertigen Produkts.

Nach der vorliegenden Erfindung kann auch dann eine kontrollierte Atmosphäre in dem Sammelbehälter vorliegen, wenn ein Ausgleichsventil, beispielsweise als Entlüftungseinrichtung, an diesem bereitgestellt ist, über welches Luft in das Innere gelangen kann, insbesondere wenn der Sammelbehälter geleert wird.

Selbst in einem solchen Fall wird nur eine definierte und/oder begrenzte Menge an Luft in den Sammelbehälter gelangen, was eine nachteilige Wechselwirkung des Vorlaufs mit der Luft vorteilhaft verringern kann.

Besonders bevorzugt ist es vorgesehen, dass der Sammelbehälter bereitgestellt ist, die filtrierte Flüssigkeit aus dem Sieb allein durch Schwerkraft aufzunehmen.

Nach der vorliegenden Erfindung ist ein Sammelbehälter gerade keine Rohrleitung zwischen den erfindungsgemäßen Aufnahmebehältern oder mit einer solchen gleich zu setzten. Ein erfindungsgemäßer Sammelbehälter weißt bevorzugt ein Volumen/Querschnitt auf, welches Größer ist als das einer Leitung entsprechender Länge nach der vorliegenden Erfindung.

Der Sammelbehälter kann ein Bereich sein, welcher mit Zu- und Ablaufleitung verbunden ist und durch das einströmende Filtrat aus dem Zulauf sukzessive befüllbar ist.

Auch in einem Zustand, in welchem Zu- und Ablaufleitung befüllt sind, kann der Sammelbehälter auch leer oder teil befüllt sein, obwohl sich dieser Zwischen Zu- und Ablaufleitung befinden kann.

Dies wäre grundsätzlich nicht möglich, wenn es sich bei dem Sammelbehälter um einen Leitungsabschnitt handeln würde.

Insbesondere ist der Sammelbehälter eine Aufnahme in Sinne eines Vorhaltebehälters, welcher auch als Zwischenspeicher für eine Teilmenge an Filtrat bezeichnet werden kann, welcher auch unabhängig von einem Flüssigkeits(zu)fluss in (aus) der Zuleitung, frei von Flüssigkeitsableitung vorliegen kann.

Wird stattdessen in einer Rohrleitung ein Zufluss von Flüssigkeit unterbrochen, wird eine Rohrleitung, insbesondere mit gravimetrischem Ablauf, grundsätzlich zumindest teilweise leerlaufen. Eine Rohrleitung wäre damit nicht frei von Flüssigkeitsableitung.

Zur Unterbrechung eines Flüssigkeitsablaufs kann an dem Sammelbehälter oder der Ablaufleitung, vorzugsweis ein Bereich des Sammelbehälters ein steuerbares Ventil vorliegen, welches zumindest zwischen einer geöffneten und einer geschlossenen Position veränderbar ist.

Disclaimer: Ein erfindungsgemäßer Sammelbehälter ist keine Rohrleitung, insbesondere nicht im Sinne des angeführten Stands der Technik.

Die vorliegende Erfindung ist zumindest dann verwirklicht, wenn eine Brauanlage mit zwei Aufnahmebehältern für Brauflüssigkeit vorliegt. Vorzugsweise sind höchstens zwei Aufnahmebehälter vorgesehen. Der Sammelbehälter gilt erfindungsgemäß nicht als Aufnahmebereich, da dieser lediglich einen Bruchteil des Fassungsvermögens eines Aufnahmebehälters aufweisen kann und nicht für die Umsetzung eines der vier benannten Verfahrensschritte beim Gären geeignet ist. Ein Aufnahmebereich kann erfindungsgemäß demnach dadurch definiert sein, dass in diesem zumindest einer der ersten drei der vier Verfahrensschritte mit einer vollständigen Charge beim Bierbrauen ermöglicht ist, da dieser die entsprechenden Einrichtungen (z. B. Heizung, Sieb, Vortex-bildende Einrichtung) aufweist.

Eine Heizeinrichtung kann vorzugsweise als Mantelheizung oder als Heizspirale ausgebildet sein. Zusätzlich oder alternativ hierzu kann in dem ersten Aufnahmebehälter ein Rührmittel vorgesehen sein, welches den Maischeprozess unterstützen kann. Die Rührmittel können mit einem antreibenden Motor verbunden sein, welcher als Teil der mobilen Brauanlage ausgebildet sein kann. Hierbei kann es sich insbesondere um einen getakteten Motor handeln und/oder einen Motor, der beim Maischen zyklisch abschaltbar ist.

Der Maischeprozess kann insbesondere in dem ersten Aufnahmebehälter durchgeführt werden, wobei eine mehrstufige Erhitzung von Malz in Wasser erfolgen kann. Die mehrstufige Erhitzung kann sowohl hinsichtlich der Temperatur als auch der Erhitzungsdauer auch in Abhängigkeit von der Befüllmenge nach einem hinterlegten automatisierten Prozess ablaufen, welcher in Form eines Computerprogramms in einem entsprechenden Speichermodul mit Prozessoreinheit hinterlegt sein kann.

Während des Maischens kann eine beliebige Anzahl von Erhitzungsschritten durchlaufen werden. Vorzugsweise wird bei einem ersten Schritt eine Temperatur von ca. 50° C, in einem zweiten Schritt eine Temperatur von ca. 60° C, in einem dritten Schritt eine Temperatur von 70° C und in einem vierten Schritt eine Temperatur von 80° C in dem ersten Aufnahmebehälter eingestellt. Die einzelnen Erhitzungsschritte können wenige Minuten bis zu einer Stunde benötigen.

Das benötigte Wasser zum Maischen kann entweder direkt in den ersten Aufnahmebehälter eingeführt werden oder über einen entsprechenden Wasseranschluss durch in die mobile Brauanlage integrierte Wasserleitungen dem ersten Aufnahmebehälter zuführbar sein.

Die integrierte Wasserleitung kann mit einem Wasserzähler und/oder Durchlauferhitzer oder Boiler versehen sein, welcher das Wasser in dem ersten und/oder dem zweiten Aufnahmebehälter mit einer vordefinierten Temperatur bereitstellen kann. Das Ende der Wasserleitung, welches in den ersten und/oder den zweiten Aufnahmebehälter mündet, kann mit einem Zip-Ball oder einem Duschkopf bereitgestellt sein, wodurch eine besonders gleichmäßige Benetzung des Inhalts des Aufnahmebehälters erfolgen kann.

Besonders bevorzugt ist es vorgesehen, dass der erste Aufnahmebehälter eine Ablufteinrichtung aufweist, mittels welcher Wasserdampf, insbesondere beim Erhitzen von Flüssigkeit im ersten Aufnahmebehälter, von diesem abführbar ist. Hierdurch kann eine definierte Aufkonzentration der Brauflüssigkeit bewirkbar sein.

Vorzugsweise ist die mobile Brauanlage, insbesondere die Aufnahmebehälter, abgesehen von der Ablufteinrichtung, im betriebsgemäßen Zustand dampfdicht verschlossen, wodurch die Menge an Brauflüssigkeit nachhaltig steuerbar ist.

Nach Abschluss des Erhitzungsprozesses im ersten Aufnahmebehälter erfolgt das Abmaischen, also das Überführen der Maische aus dem ersten Aufnahmebehälter in den zweiten Aufnahmebehälter, welcher in diesem Fall als Läuterbottich fungiert.

In dem zweiten Aufnahmebehälter wird in einem zweiten Verfahrensschritt die Flüssigkeit von den meisten festen Bestandteilen abgetrennt. Dieser Vorgang wird als Läuterprozesses bezeichnet. Hierfür kann in dem zweiten Aufnahmebehälter ein Sieb oder ein sonstiges Filtrationselement vorgesehen sein, welches Feststoffe zurückhalten jedoch von Flüssigkeit durchdringbar sein kann, wodurch die Flüssigkeit in einem unteren Bereich des zweiten Aufnahmebehälters über eine entsprechende Öffnung im Bodenbereich ableitbar ist. Dem zweiten Aufnahmebehälter kommt demnach in diesem Verfahrensschritt die Aufgabe eines Läuterbottichs zu.

Bis sich auf dem Sieb oder Filterelement ein entsprechender Filterkuchen ausgebildet hat, welcher die Filtration unterstützt, kann durch das Sieb ein Teil von groben Feststoffen durchtreten. Dieser Vorlauf, welcher auch Trübwürze genannt wird, ist vorzugsweise dem Filtrationsprozess erneut zuzuführen, um die Ausbeute zu erhöhen. Die zuvor bereits angesprochene, hierfür erfindungsgemäß bevorzugt eingesetzte Vorrichtung eines Sammelbehälters wird nachstehend weiter erläutert.

Während des Läuterprozesses, also insbesondere nach Abschluss des Vorlaufs, kann filtrierte Flüssigkeit dem ersten Aufnahmebehälter zugeführt werden. Hierfür kann eine Pumpe vorgesehen sein, welche die Filtrationsflüssigkeit dem ersten Aufnahmebehälter zuführt, wobei vorzugsweise die Filtration dennoch unterdruckfrei durchführbar ist, also vorrangig durch Gravitation erfolgt.

Um die Ausbeute an Brauflüssigkeit nach dem Läutern zu erhöhen, kann über eine entsprechende (Kalt-)wasserzufuhr in einem oberen Bereich des zweiten Aufnahmebehälters Frischwasser zugeführt werden, mittels welchem der Filterkuchen waschbar sein kann. Dieser Vorgang wird auch als Anschwänzen bezeichnet.

Die geläuterte Brauflüssigkeit kann in dem ersten Aufnahmebehälter erneut einer Hitzebehandlung unterzogen werden, welche auch als Würzekochen bezeichnet wird. Im Anschluss an das Würzekochen kann die Brauflüssigkeit wieder in den zweiten Aufnahmebehälter überführt werden. Zumindest in diesem Verfahrensschritt ist es jedoch erfindungsgemäß vorgesehen, dass die Brauflüssigkeit in den zweiten Aufnahmebehälter so eingeleitet wird, dass sich in dem zweiten Aufnahmebehälter ein Flüssigkeitszyklon ausbildet. Hierfür kann eine Öffnung, durch welche Brauflüssigkeit in den zweiten Aufnahmebehälter gelangt, gegenüber einer Vertikalachse des zweiten Aufnahmebehälters exzentrisch ausgerichtet sein.

Vorzugsweise ist der Aufnahmebehälter zumindest auf einer Innenseite mit einer abgerundeten Oberfläche ausgebildet. Besonders bevorzugt handelt es sich um einen Hohlzylinder. Zum Ausbilden des Vortex oder Zyklons kann die Flüssigkeit auf oder entlang der Innenwandung des zweiten Aufnahmebehälters geführt werden.

Die Leitung zum Einleiten von Brauflüssigkeit aus dem ersten Aufnahmebehälter in den zweiten Aufnahmebehälter kann demnach in etwa parallel/gleichförmig zur Innenwandung des zweiten Aufnahmebehälters ausgerichtet sein, wodurch die Flüssigkeit beim Eintreten in den zweiten Aufnahmebehälter strudelartig an der Innenwandung entlang gleitet, was insgesamt der Ausbildung eines Zyklons zuträglich sein kann.

Schwebestoffe, welche durch den Läuterprozesses nicht in dem Filterkuchen zurückgehalten wurden, können durch den bereitgestellten Strudel/Vortex/Zyklon in einem mittleren Bereich des zweiten Aufnahmebehälters in einem Bodenbereich gesammelt und so von der Brauflüssigkeit abgetrennt werden. Nach dem Abtrennen dieser Sedimente kann die Flüssigkeit aus dem zweiten Aufnahmebehälter und aus der mobilen Brauanlage herausgepumpt werden, um die Brauflüssigkeit einem Gärtank zuzuführen.

Nach einer Ausführungsform der vorliegenden Erfindung kann die Brauflüssigkeit anschließend an die Vortex-Sedimentation einem Filterelement zuführbar sein, welches vorzugsweise als Feinfilter ausgebildet ist, um den Filtrationsgrad noch weiter zu erhöhen. Zwischen dem zweiten Aufnahmebehälter und dem Auslauf für Brauflüssigkeit aus der mobilen Brauanlage können ein Filter und/oder eine Kühleinrichtung bereitgestellt sein, durch welche die Brauflüssigkeit durchtritt, bevor sie die mobile Brauanlage verlässt.

Grundsätzlich kann die Brauanlage mit bereits einer einzigen Pumpe alle voranstehend beschriebenen Verlagerungen von Flüssigkeit in der Brauanlage, insbesondere zwischen dem ersten und dem zweiten Aufnahmebehälter, und zum Zurückführen des Vorlaufs aus dem Sammelbehälter in den Läuterbottich ermöglichen. Dies kann beispielsweise durch Bereitstellen eines entsprechenden Leitungssystems ermöglicht sein, in welchem einzelne Abschnitte mittels Ventile verschließbar sind, wodurch der Zu- und Ablauf aus beispielsweise dem ersten beziehungsweise zweiten Aufnahmebehälter regelbar ist.

Ob von dem ersten Aufnahmebehälter in den zweiten Aufnahmebehälter, von dem zweiten Aufnahmebehälter in den ersten Aufnahmebehälter oder von dem zweiten Aufnahmebehälter aus der mobilen Brauanlage heraus, grundsätzlich kann die Brauflüssigkeit über die eine (gemeinsame) Pumpe geleitet werden, wobei durch entsprechendes Öffnen und Schließen der Ventile im Leitungssystem die Strömungsrichtung für die Brauflüssigkeit vor und nach dem Durchtreten durch die Pumpe vorgebbar ist.

Nach einer bevorzugten Ausführungsform der vorliegenden Erfindung ist es vorgesehen, dass der Sammelbehälter als diskrete Einheit, insbesondere als Vorhaltebehälter, ausgebildet ist. Der Sammelbehälter, welcher insbesondere zur Aufnahme von Trübwürze bereitgestellt sein kann, kann auch als Laterne bezeichnet werden. Der Sammelbehälter kann mit einer transparenten Sichtöffnung bereitgestellt sein, beispielsweise in Form eines Bullauges, durch welches eine Trübung der Brauflüssigkeit im Inneren des Sammelbehälters durch Sichtprüfung feststellbar sein kann.

Zweckmäßigerweise ist es vorgesehen, dass der Sammelbehälter mit einem Durchflussregler bereitgestellt/wirkverbunden ist, mittels welchem eine Zuflussgeschwindigkeit aus dem zweiten Aufnahmebehälter zu dem Sammelbehälter einstellbar und/oder unterbrechbar ist. Insbesondere für die Ausbildung eines besonders gleichmäßigen Filterkuchens kann es vorteilhaft sein, insbesondere während der Entnahme der Trübwürze aus dem Läuterbottich (zweiter Aufnahmebehälter), die Fließgeschwindigkeit des Vorlaufs durch das Sieb zu begrenzen oder sogar anzuhalten. Hierfür kann in dem Bereich zwischen Aufnahmebehälter und Sammelbehälter (welcher auch die beiden Einrichtungen umfassen kann) ein Durchflussregler bereitgestellt sein, mittels welchem die Geschwindigkeit, mit welcher Flüssigkeit dem Sammelbehälter zuführbar ist, einstellbar sein kann. Grundsätzlich kann der Durchflussregler auch bereitgestellt sein, einen Abfluss von Brauflüssigkeit aus dem zweiten Aufnahmebehälter zu unterbrechen.

Besonders bevorzugt ist es vorgesehen, dass der Durchflussregler mit einem optischen Sensor zusammenwirkt, welcher ausgebildet ist, eine Trübung der filtrierten Flüssigkeit festzustellen und die Durchflussgeschwindigkeit des/am Durchflussreglers an den Trübegrad anzupassen und/oder diese zu unterbrechen. Der Sensor kann auch bereitgestellt sein, anhand des Trübegrads das Ende eines Vorlaufs zu bestimmen und eine Ventilstellung zu beeinflussen, welche die nunmehr im Sammelbehälter ankommende geläuterte Flüssigkeit dem ersten Aufnahmebehälter zuführt, anstatt sie in den zweiten Aufnahmebehälter zurückzuführen. Der Sensor zur Bestimmung des Trübegrads des Filtrats kann in einem Bodenbereich nach dem Sieb im zweiten Aufnahmebehälter, in der Rohrleitung zwischen zweiten Aufnahmebehälter und Rohrleitung oder im Sammelbehälter, insbesondere einem Bodenbereich des selbigen, vorgesehen sein.

Mittels des Sensors kann eine Trübe der geläuterten Brauflüssigkeit und oder des Vorlaufs feststellbar sein, welche einer hinterlegbaren Maximaltrübe entsprechen kann. Wird ein Unterschreiten des Trübegrads durch den Sensor festgestellt, kann eine automatische Beendung des Vorlaufs erfolgen. Nach Beenden des Vorlaufs kann die geläuterte Brauflüssigkeit aus dem Sammelbehälter dem ersten Aufnahmebehälter statt dem zweiten zuführbar sein, in welchem anschließend das Würzekochen stattfinden kann.

Auch nach Beendigung des Vorlaufs kann der Sensor bereitgestellt sein, eine Trübe des Filtrats zu bestimmen und gegebenenfalls den Durchfluss durch den Durchflussregler begrenzen oder sogar ganz einstellen, sollte die Filtrationsgüte des Filtrats aus unvorhergesehenen Gründen einbrechen.

Zweckmäßigerweise kann es vorgesehen sein, dass der Sammelbehälter eine Sensoreinrichtung aufweist, welche einen definierbaren Minimalstand und/oder einen definierbaren Maximalstand an Flüssigkeit in dem Sammelbehälter erfasst. Das Erfassen des Minimalstands und/oder Maximalstands an Flüssigkeit in dem Sammelbehälter kann insbesondere dann eine Rolle spielen, wenn Flüssigkeit portionsweise aus dem Sammelbehälter dem zweiten Aufnahmebehälter rückgeführt werden soll.

Da das Volumen des Sammelbehälters zwischen den beiden Füllständen definiert sein kann, lässt sich über die Anzahl an definierten Befüllungen und Entleerungen des Sammelbehälters die Menge an Trübwürze bestimmen, welche in den zweiten Aufnahmebehälter rückführbar ist/zurückgeführt wurde.

Zum Zurückführen der Trübwürze in den zweiten Sammelbehälter kann es zweckmäßig sein, dass eine Pumpe mit dem Sammelbehälter wirkverbunden ist und bereitgestellt ist, Flüssigkeit aus dem Sammelbehälter abzuführen und/oder dem zweiten Aufnahmebehälter zuzuführen.

Die Pumpe kann dabei mit der Sensoreinrichtung verbunden sein, welche den Minimal- und Maximalstand an Flüssigkeit im Sammelbehälter bestimmt, sodass zumindest während des Vorlaufs nur eine Flüssigkeitsmenge beim Erreichen des maximalstands absaugbar ist und das Absaugen beim Erreichen des Minimalstand beendet wird.

Der Sammelbehälter kann mit einer Entlüftungseinrichtung bereitgestellt sein, welche den Sammelbehälter beim Entleeren desselbigen gegenüber der Atmosphäre druckausgleicht, wodurch einem Unterdruck in dem Sammelbehälter vorgebeugt wird, welcher den Läuterprozesses, also die Filtration, nachteilig beeinflussen könnte.

Da der Sammelbehälter dem Sieb in Flussrichtung von geläuterter Brauflüssigkeit im Filtrationsprozess nachgeschaltet ist, könnte ein Unterdruck in dem Sammelbehälter einen Unterdruck auf der filtrierten Seite des Siebs bereitstellen, wodurch eine Verdichtung des Filterkuchens entstehen könnte, welche letztlich zu einer Unterbrechung des Filtrationsvorgangs führen kann. Eine Verbindung zwischen Sammelbehälter und Pumpe kann daher vorzugsweise in einem unteren Bereich des Sammelbehälters vorgesehen sein und die Entlüftungseinrichtung in einem oberen Bereich des Sammelbehälters. So kann eine unterdruckfreie Entleerung des Sammelbehälters gewährleistet werden.

Demnach kann es vorgesehen sein, dass der Sammelbehälter Druckausgleichsmittel aufweist, welche beim Abführen von Flüssigkeit aus dem Sammelbehälter einer Unterdruckbildung entgegenwirken. Dies kann insbesondere ein Ventil sein, welches während des Absaugens geöffnet sein kann und ansonsten keinen Eintritt von Luft in den Sammelbehälter ermöglicht.

Die Pumpe zum Rückführen von Vorlauf in den Läuterbottich kann dieselbe Pumpe sein, die Brauflüssigkeit zwischen dem ersten und dem zweiten Aufnahmebehälter hin und her verlagern kann.

Besonders bevorzugt ist es vorgesehen, dass eine Zuführeinrichtung für den zweiten Aufnahmebehälter bereitgestellt ist, mittels welcher Flüssigkeit Zyklon-bildend dem zweiten Aufnahmebehälter zuführbar ist.

Eine Verlagerung von Flüssigkeit innerhalb der Anlage kann vorzugsweise mittels Schwerkraft und/oder der gemeinsamen Pumpe bewirkbar sein.

Vor einer Austrittsöffnung für Brauflüssigkeit aus der mobilen Brauanlage können ein Filter und/oder ein Kühler vorgesehen sein, durch welche Brauflüssigkeit beim Verlassen der Brauanlage vor der Gärung führbar ist.

Bei dem erfindungsgemäßen Verfahren kann zu läuternde Brauflüssigkeit einer Filtrationseinrichtung, insbesondere einem Aufnahmebehälter mit einem Sieb, zugeführt werden und mit oder ohne Sedimentationspause ein Vorlauf an geläuterter Flüssigkeit durch das Sieb entnommen werden. Dabei wird eine Durchflussgeschwindigkeit durch das Sieb mittels einer Drossel eingestellt, und der Vorlauf wird in einem Sammelbehälter in diskreten Portionen gesammelt. Bei Erreichen einer vordefinierten Maximalbefüllung bzw. Minimalbefüllung des Sammelbehälters wird eine Entleerung des Sammelbehälters eingeleitet bzw. beendet und entweder:
a. eine vordefinierte Anzahl der diskreten Portionen an Vorlauf in die Filtrationseinrichtung rückgeführt oder
b. basierend auf Informationen zum Trübegrad des Vorlaufs dieser bis zum Erreichen einer voreingestellten Trübung rückgeführt.

Die Informationen zum Trübegrad können beispielsweise auf einer Sichtprüfung oder Sensorinformationen eines optischen Sensors im Bereich des Sammelbehälters und/oder in einer Rohrleitung zwischen Sammelbehälter und dem Aufnahmebehälter mit Sieb beruhen.

Die Erfindung wird nachfolgend anhand der beigefügten Zeichnung näher erläutert.

Es zeigt:

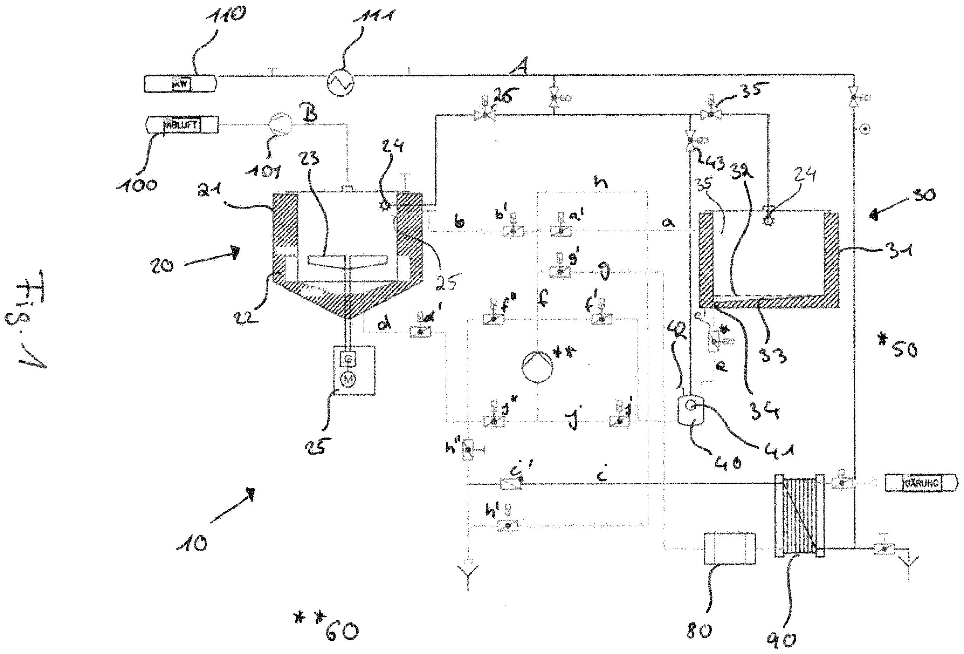

- Figur 1: den strukturellen Aufbau einer Ausführungsform der erfindungsgemäßen mobilen Brauanlage, insbesondere mit Fließschema in Form von Rohrleitungen, Ventilen, Aufnahmebehälter und Pumpe.

Figur 1 zeigt eine Ausführungsform der mobilen Brauanlage 10 hinsichtlich ihres Innenlebens. Die mobile Brauanlage 10 kann mindestens einen Aufnahmebehälter, vorzugsweise höchstens 2 Aufnahmebehälter 20 und 30, aufweisen. Der erste Aufnahmebehälter 20 kann mit einer Außenwandung 21 ausgebildet sein, welche ein Heizelement 22 aufweisen kann. Dieses kann an oder in der Außenwandung 21 vorgesehen sein. Vorzugsweise ist das Heizelement 22 als Mantelheizung ausgebildet.

In dem ersten Aufnahmebehälter 20 kann ein Rührmittel 23, beispielsweise als Rührwerkzeug, vorgesehen sein, welches über den Motor 25 antreibbar sein kann. Vorzugsweise in einem oberen Bereich kann ein Zulauf für Flüssigkeit, insbesondere für Wasser, vorgesehen sein, welcher über ein Zulaufsystem mit einer Wasserzufuhr 110, welche vorzugsweise als Kaltwasserzufuhr ausgebildet ist, verbunden sein kann.

Für eine besonders gleichmäßige Verteilung der Flüssigkeit im Inneren des Aufnahmebehälters kann die Wasserzufuhr 24 mit einem Duschkopf oder einem Zip-Ball an seinem behälterseitigen Ende verbunden sein. Ebenfalls in den ersten Aufnahmebehälter 10 ragend kann eine Leitung b vorgesehen sein, welche Teil eines Leitungssystems sein kann, und/oder mit dem zweiten Aufnahmebehälter 30 fluidisch verbunden ist. Die Leitung b kann insbesondere in einem oberen Bereich des ersten Aufnahmebehälters 20 angeordnet sein. In einem Bodenbereich beziehungsweise bodennahen Bereich kann eine zweite Leitung d vorgesehen sein, welche Teil desselben oder eines getrennten Leitungssystems sein kann, welches ebenfalls mit dem zweiten Aufnahmebehälter 30 fluidisch verbunden sein kann. Die Leitung b kann insbesondere als Zuleitung dienen und die Leitung d als Ableitung von Flüssigkeit aus dem ersten Aufnahmebehälter 20. Die Leitung b kann mit einem Ablauf e aus dem zweiten Aufnahmebehälter 30 verbunden sein und ausgebildet sein, aus dem zweiten Aufnahmebehälter 30 abfließende bzw. abgepumpte Flüssigkeit dem ersten Aufnahmebehälter 20 zuzuführen.

Die Ableitung d kann mit einer Zuleitung a des zweiten Aufnahmebehälters 30 verbunden sein und ausgebildet sein, Flüssigkeit aus dem ersten Aufnahmebehälter über den Zulauf a dem zweiten Aufnahmebehälter 30 zuzuführen. Die Leitungen b und d können als eine einzige Leitung verwirklicht sein. Diese ist dann vorzugsweise in dem ersten Aufnahmebehälter in einem Bodenbereich des ersten Aufnahmebehälters 20 vorgesehen.

Das Leitungssystem zwischen dem ersten Aufnahmebehälter 20 und dem zweiten Aufnahmebehälter 30 kann mit mindestens einer Pumpe 60, vorzugsweise mit höchstens mit einer Pumpe 60, betreibbar sein. Das Leitungssystem, welches den ersten und den zweiten Aufnahmebehälter 20, 30 über die Pumpe 60 miteinander verbindet, kann mindestens eines der Leitungssegmente a bis j aufweisen. Mindestens eines der Leitungssegmente, vorzugsweise jedes Leitungssegment, kann dabei mindestens ein verschließbares Ventil a` bis h' und h" aufweisen, welches vorzugsweise zwischen Aufnahmebehälter und Pumpe vorgesehen sein kann. Vorzugsweise weist das Leitungssystem zumindest ein Leitungssegment in Flussrichtung der Brauflüssigkeit zu jeder Seite der Pumpe zwischen dem ersten und dem zweiten Aufnahmebehälter auf. Die Kombination von Leitungssegmenten, wie sie sich beispielhaft aus Figur 1 ergibt, ermöglicht bei entsprechender Schaltung der Ventile, demnach bei gezieltem Öffnen und Schließen einzelner Ventile, trotz gleichbleibender Pumprichtung der Pumpe 60 das Zuführen von Flüssigkeit aus dem ersten Aufnahmebehälter 20 in den zweiten Aufnahmebehälter 30 oder anders herum.

Auch kann ein Abpumpen der Brauflüssigkeit aus einem der beiden Aufnahmebehälter 20, 30 aus der mobilen Brauanlage heraus über das Leitungssegment g oder i erfolgen. Soll Brauflüssigkeit aus der mobilen Brauanlage 10 ausgetragen werden, kann ein Ventil, beispielsweise d' oder e' einer Ablaufleitung, an dem ersten oder zweiten Aufnahmebehälter 20, 30 geöffnet werden, die Zulaufventile, beispielsweise b' und/oder a' können verschlossen und das Ventil g' geöffnet werden, wodurch der Zulauf von gepumpter Brauflüssigkeit zu der Pumpe 60 in Richtung "Gärung" gemäß Figur 1 aus der mobilen Brauanlage heraus ermöglicht ist.

Der zweite Aufnahmebehälter kann auch als Reinigungsbehälter bezeichnet werden, da dieser mit einem Filter 32 ausgebildet sein kann, welcher zum Läutern der Maische aus dem ersten Aufnahmebehälter 10 ausgebildet ist. Das Überführen von Maische in den Läuterbottich wird auch als Abmaischen bezeichnet.

Auch der zweite Aufnahmebehälter hat eine Außenwandung 31, welche in einem unteren Bereich 33 mit einer Neigung bereitgestellt ist, welche in einem Bodenbereich einen flüssigkeitssammelnden Tiefpunkt bereitstellt, an welchem der Ablauf e angeordnet sein kann. An dem Ablauf e kann ein erstes Ventil 50 vorgesehen sein, welches auch mit einem optischen Sensor ausgebildet sein kann. Der optische Sensor kann insbesondere ausgebildet sein, einen Trübegrad der Läuterflüssigkeit zu bestimmen. Der Leitungsabschnitt e kann fluidisch mit einem Sammelbehälter 40 verbunden sein, welcher auch als Laterne bezeichnet werden kann. Diese kann vorzugsweise ein Sichtglas/Bullauge 41 aufweisen, über welches eine Trübung der Läuterflüssigkeit bestimmbar ist. Vorzugsweise weist der Sammelbehälter 40 mindestens einen Sensor auf, welcher einen definierbaren Minimalstand an Flüssigkeit und/oder einen definierbaren Maximalstand an Flüssigkeit erfasst.

Der Sammelbehälter 40 kann vorzugsweise eine batchweise Läuterung von Flüssigkeit in dem zweiten Aufnahmebehälter 30 ermöglichen. Dies kann insbesondere dann zweckdienlich sein, wenn ein Vorlauf zu Beginn der Filtration von Maische in dem zweiten Aufnahmebehälter 30 benötigt wird, um Läuterflüssigkeit ausreichender Güte zu erhalten. Der Vorlauf kann hierbei batchweise in dem Sammelbehälter gesammelt werden und, beispielsweise bei Erreichen des Flüssigkeitsstands des vordefinierten Maximalstands, zurück in den zweiten Aufnahmebehälter 30 über die Pumpe 60 und beispielsweise die Leitungssegmente j, f und a oder eine andere Verbindung zwischen Sammelbehälter 40 und Zulauf a des zweiten Aufnahmebehälters 30 gepumpt werden, bis ein definierter Minimalstand in dem Sammelbehälter 40 erreicht ist. Während des Abpumpens kann ein Zulauf von filtrierter Flüssigkeit aus dem Läuterbottich unterbrochen sein. Ist eine gewünschte Läutergüte erreicht, kann die weitere Läuterflüssigkeit auch kontinuierlich in den ersten Aufnahmebehälter gepumpt werden. Die Abpumpgeschwindigkeit kann hierbei an eine Zulaufgeschwindigkeit aus dem Läuterbottich in den Sammelbehälter angepasst sein oder unterbrechbar sein. Insbesondere kann das Erreichen der minimalen Füllhöhe dazu führen, dass das Abpumpen unterbrochen wird, wobei der Zulauf von Flüssigkeit in den Sammelbehälter konstant geöffnet sein kann. Hierfür kann der Sensor für die Mindestfüllhöhe in den Sammelbehälter mit der Pumpensteuerung wechselwirken, um durch das Erreichen der Minimalfüllhöhe eine Aussetzung des Abpumpvorgangs aus dem Sammelbehälter zu unterbrechen. Hierdurch kann insbesondere vermieden sein, dass die Pumpe "trocken" läuft.

Das Ventil 50 kann mit den Sensoren des Sammelbehälters 40 zusammenwirken und beispielsweise bei Erreichen einer definierten Füllhöhe, beispielsweise des definierten Maximalstands in dem Sammelbehälter 40, einen weiteren Zulauf von Flüssigkeit aus dem Aufnahmebehälter 30 durch Verschließen des Ventils 50 unterbinden. Hingegen kann beispielsweise bei Erreichen der definierten minimalen Füllhöhe das Ventil 50 ein Signal erhalten, wieder zu öffnen und den Zulauf von Läuterflüssigkeit in den Sammelbehälter 40 freizugeben. Gleichzeitig kann die Pumpe durch den Sensor direkt oder indirekt ein Signal erhalten, den Pumpvorgang zu unterbrechen, bis ein weiteres Signal, beispielsweise bei Erreichen des maximalen Füllstands, an die Pumpe gesendet wird. Hierdurch ist die Menge an Vorlauf, welche in den zweiten Aufnahmebehälter 30 rückführbar ist, über die Differenz zwischen der minimalen Füllhöhe und der maximalen Füllhöhe und der Anzahl an rückgeführter Befüllung des Sammelbehälters 40 bestimmbar. Dieser Vorgang des abhängigen Öffnens und Schließens des Ventils 50 im Zusammenhang mit einer Füllhöhe im Sammelbehälter 40 kann auch ohne den optischen Sensor am Ventil 50 erfolgen, welcher dafür nicht erforderlich ist.

Da zum Rückführen von Flüssigkeit aus dem Sammelbehälter 40 in den zweiten Aufnahmebehälter 30 die Pumpe 60 verwendet werden kann, kann ein Druckausgleichselement 42 an dem Sammelbehälter 40 vorgesehen sein, welches ausgebildet ist, einen Ausgleichsdruck in dem Sammelbehälter 40 bereitzustellen, wenn die Pumpe Flüssigkeit aus dem Sammelbehälter 40 zurück in den zweiten Aufnahmebehälter 30 pumpt. Das Druckausgleichselement kann eine Öffnung sein, welche mit der die mobile Brauanlage umgebenden Atmosphäre kommuniziert. Hierdurch kann Luft in das Innere des Sammelbehälters einströmen, wenn die Läuterflüssigkeit aus dem Sammelbehälter 40 abgepumpt wird. Ohne das Druckausgleichselement 42 könnte bei verschlossenem Ventil 50 ansonsten ein Unterdruck in dem Sammelbehälter 40 entstehen. Die Ablaufleitung kann über einen Tiefpunkt 34 in einem unteren Bereich des zweiten Aufnahmebehälters 30 mit dem Sammelbehälter 40 verbunden sein.

Sowohl der erste Aufnahmebehälter 20 als auch der zweite Aufnahmebehälter 30 können über das bereits erwähnte Kaltwasserzulaufsystem 110 mit Frischwasser versorgbar sein. Durch die entsprechenden Ventile 26, 35 und 43 kann der Zulauf von Frischwasser für den ersten Aufnahmebehälter 20, den zweiten Aufnahmebehälter 30 und/oder den Sammelbehälter 40 individuell einstellbar sein. Dem Kaltwasserzulauf 110 kann ein Boiler 111 nachgeschaltet sein, welcher auch als Durchlauferhitzer ausgebildet sein kann und Frischwasser definierbarer Temperatur den erwähnten Einrichtungen zuführen kann.

Eine Besonderheit des Zulaufs a in den zweiten Aufnahmebehälter 30 kann darin bestehen, dass dieser abgewinkelt bereitgestellt sein kann, wodurch die Brauflüssigkeit in den zweiten Aufnahmebehälter wirbelausbildend einströmen kann. Hierdurch kann, wie beispielsweise in einem filterlosen Staubsauger (Zyklon-Technologie), ein Strudel oder Wirbel in dem zweiten Aufnahmebehälter 30 bereitgestellt werden, was dazu führt, dass auch besonders kleine Schwebeteilchen sich durch die geführt rotierende Bewegung von Flüssigkeit in dem zweiten Aufnahmebehälter in einem mittleren Bereich, vorzugsweise in Bodennähe des zweiten Aufnahmebehälters 30, abführbar sammeln. Hierdurch kann die Filtrationsgüte der Brauflüssigkeit erhöht werden.

In einem oberen Bereich des ersten Aufnahmebehälters 10 kann eine Ablufteinrichtung vorgesehen sein, welche mit dem Gasraum des ersten Aufnahmebehälters 20 in Gasaustausch steht und ausgebildet ist, Gas, insbesondere Dampf, aus dem Inneren des ersten Aufnahmebehälters 20 gezielt abzuleiten. Hierfür kann eine Abluftleitung B vorgesehen sein, welche über eine entsprechende Gaspumpe, beispielsweise eine Turbine oder einen Ventilator 101, Gase und Dämpfe aus dem ersten Aufnahmebehälter 20 abführen kann. Diese können einer Abluft 100 zuführbar sein.

Aufgrund der definierten Querschnittsoberfläche des ersten Aufnahmebehälters, der definierbar einstellbaren Temperatur im ersten Aufnahmebehälter und der definierten Absaugleistung der Turbine oder des Ventilators 110 kann über die steuerbare Absaugzeit eine definierbare Menge an Flüssigkeit in Dampfform beim Maischeerhitzen oder Würzekochen abführbar sein.

Für ein Einstellen einer definierten Qualität des Brauprodukts kann es zweckdienlich sein, die Flüssigkeitsmenge während des Brauprozesses definiert zu reduzieren. Hierfür kann die erfindungsgemäß vorgesehene Ablufteinrichtung die entsprechende Menge an Flüssigkeitsdämpfen aus der mobilen Brauanlage, insbesondere aus dem ersten Aufnahmebehälter, abführen.

Die erfindungsgemäße mobile Brauanlage kann ein Speichermedium sowie eine prozessorgesteuerte Datenverarbeitungsanlage aufweisen, welche den Brauprozess insbesondere von dem Moment an, in welchem das Malz für das Maischen in den ersten Aufnahmebehälter eingetragen wird, bis zum Abpumpen der Brauflüssigkeit zum Gärprozess automatisch steuern kann. Ein händischer Eingriff kann insbesondere beim Entfernen des Filters in dem zweiten Aufnahmebehälter 30 nach dem Läutern notwendig sein und für das Reinigen des ersten und/oder des zweiten Aufnahmebehälters 20, 30, um eine saubere Verfahrensführung zu ermöglichen. Der Filter kann vorzugsweise lösbar in dem zweiten Aufnahmebehälter vorgesehen sein.

Die übrigen Verfahrensschritte, insbesondere die voranstehend beschriebenen, können automatisiert erfolgen, da die eingebrachte Menge an Flüssigkeit in den ersten Aufnahmebereich 20 und die beim Maischen und/oder Würzekochen über die Abluftanlage entfernte Flüssigkeitsmenge kontrollierbar beziehungsweise definierbar sind. Über den Sensor am Ventil 50 sind ein Gütegrad der Läuterflüssigkeit beziehungsweise die Anzahl der Befüllungen des Sammelbehälter 40 bestimmbar, welche in den Läuterbottich 30 zurückgeführt werden sollten, um einen gewünschten Läutergrad zu erreichen. Dabei sollen Erhitzungsdauer und ein Temperaturgradient beim Maischen und Würzekochen einstellbar, programmierbar beziehungsweise hinterlegbar sein.

Die Erfindung gemäß Anlage ist demnach ausgelegt, auf minimalem Raum eine vollständige Einrichtung zum Herstellen von gärfertiger Brauflüssigkeit bereitzustellen.

Für eine erleichterte Reinigung kann an einem Gehäuse der mobilen Brauanlage eine Brause oder ein Duschkopf angebracht sein, mittels welcher/welchem die beiden Aufnahmebehälter reinigbar sind. Das Abwasser kann über das Leitungssystem, insbesondere mittels der Pumpe, als Abwasser abführbar sein. Das Abwasser kann über dieselbe Leitung wie am Ende des Brauprozesses das Abführen der Brauflüssigkeit zur Gärung erfolgen.

Sowohl der erste als auch der zweite Aufnahmebehälter sind durch eine entsprechende Abdeckung abgedeckt, wobei die Abdeckung des ersten Aufnahmebehälters 20 eine Zufuhröffnung für die Ablufteinrichtung aufweisen kann.

Die Aufnahmebehälter können insbesondere einen runden Querschnitt aufweisen, was beim Rühren beziehungsweise beim Ausbilden eines Zyklons oder Vortex vorteilhaft sein kann.

In die mobile Brauanlage kann insbesondere in etwa die Höhe einer Küchenarbeitsfläche haben und/oder zumindest auf einer Seite verschließbaren Öffnungen an einer Seitenwand aufweisen, über welche die innenliegende Mechanik zugänglich ist. Auf einer Unterseite der mobilen Brauanlage können Rollen angeordnet sein, mittels welcher die mobile Brauanlage verfahrbar ist. Vorzugsweise von einer Außenseite erreichbar können Anschlüsse für Frischwasser, Abwasser und/oder Brauflüssigkeit an der mobilen Brauanlage vorgesehen sein. Diese können vorzugsweise gegenüber einem Grundkörper der Brauanlage nach außen vorstehen. Auch kann ein Anschluss für eine Abluft bereitgestellt sein, über welchen die Ablufteinheit Gase und Dämpfe aus zumindest einem der Aufnahmebehälter abführen kann. Die Turbine beziehungsweise der Ventilator zum Abführen der Gase und Dämpfe kann hierbei Teil der mobilen Brauanlage sein. Weiterhin können Anschlüsse zur Energieversorgung an der mobilen Brauanlage vorgesehen sein oder die mobile Brauanlage mit mindestens einem Kabel ausgestattet sein, über welches elektrische Energie der mobilen Brauanlage zuführbar ist.

An dem Gehäuse, vorzugsweise auf einer oberen Oberfläche der mobilen Brauanlage kann eine Steuerungseinheit vorgesehen sein, mittels welcher eine spezifische Verfahrensführung zum Brauen mittels der mobilen Brauanlage bereitstellbar ist. Vorzugsweise kann es sich hierbei um ein Touch-Display handeln.

In der bereits erwähnten Speichereinheit können verschiedene Verfahrensführung zum Erreichen verschiedener Brauergebnisse hinterlegt Bar sein. Diesbezüglich können beispielsweise unterschiedliche Flüssigkeitsmengen, Temperaturen, Temperaturgradienten, Maisch- und Würzekoch-Zeiten hinterlegt Bar sein, welche unmittelbar Einfluss auf die Verfahrensführung haben können.

## Patentansprüche

1. Mobile Brauanlage mit
zwei Aufnahmebehältern (20, 30) für Brauflüssigkeiten, welche miteinander unterbrechbar fluidisch verbunden sind, wobei mindestens der erste Aufnahmebehälter (20) eine Heizeinrichtung aufweist und der zweite Aufnahmebehälter (30) mit einem Sieb (39) bereitgestellt ist,
**dadurch gekennzeichnet,**
**dass** dem zweiten Aufnahmebehälter (30) ein diskreter, Sammelbehälter (40) für filtrierte Flüssigkeit aus dem Sieb (39) nachgeschaltet ist, welcher mit dem zweiten Aufnahmebehälter (30) über eine Leitung fluidisch verbunden ist,
**dass** zwischen dem zweitem Aufnahmebehälter (30) und dem Sammelbehälter (40) ein Durchflussregler bereitgestellt ist, mittels welchem eine Zuflussgeschwindigkeit von Flüssigkeit zu dem Sammelbehälter (40) einstellbar und/oder unterbrechbar ist,
**dass** der Sammelbehälter (40) mit einer Ablaufleitung für Flüssigkeit verbunden ist, über welche direkt, also an dem ersten Aufnahmebehälter vorbei, Flüssigkeit aus dem Sammelbehälter (40) in einen dem Sieb (39) vorgeschalteten Bereich des zweiten Aufnahmebehälters (30) rückführbar ist.

2. Mobile Brauanlage nach Anspruch 1,
**dadurch gekennzeichnet,**
**dass** der Sammelbehälter (40) als Vorhaltebehälter, ausgebildet ist.

3. Mobile Brauanlage nach einem der Ansprüche 1 bis 3,
**dadurch gekennzeichnet,**
**dass** der Durchflussregler mit einem optischen Sensor zusammenwirkt, welcher ausgebildet ist, eine Trübung der filtrierten Flüssigkeit festzustellen und die Durchflussgeschwindigkeit des Durchflussreglers an den Trübegrad anzupassen.

4. Mobile Brauanlage nach einem der Ansprüche 1 bis 3,
**dadurch gekennzeichnet,**
**dass** der Sammelbehälter (40) eine Sensoreinrichtung aufweist, welche einen Minimalstand und/oder einen Maximalstand an Flüssigkeit in dem Sammelbehälter (40) erfasst.

5. Mobile Brauanlage nach einem der Ansprüche 1 bis 4,
**dadurch gekennzeichnet,**
**dass** eine Pumpe (60) mit dem Sammelbehälter (40) wirkverbunden und bereitgestellt ist, Flüssigkeit aus dem Sammelbehälter abzuführen und dem zweiten Aufnahmebehälter zuzuführen.

6. Mobile Brauanlage nach einem der Ansprüche 1 bis 5,
**dadurch gekennzeichnet,**
**dass** eine Zuführeinrichtung für den zweiten Aufnahmebehälter (30) bereitgestellt ist, mittels welcher Flüssigkeit zyklonbildend dem zweiten Aufnahmebehälter (30) zuführbar ist.

7. Mobile Brauanlage nach einem der Ansprüche 1 bis 6,
**dadurch gekennzeichnet,**
**dass** der Sammelbehälter (40) Druckausgleichsmittel aufweist, welche beim Abführen von Flüssigkeit aus dem Sammelbehälter (40) einer Unterdruckbildung entgegenwirken.

8. Mobile Brauanlage nach Anspruch 1,
**dadurch gekennzeichnet, dass** der Sammelbehälter (40) ein größeres Volumen aufweist, als die Leitung (e), welche den Sammelbehälter (40) mit dem zweiten Aufnahmebehälter (30) verbindet.

9. Verfahren zum automatisierten Bereitstellen einer Filtrationsgüte in einem Läuterprozess, mittels einer Vorrichtung nach einem der Ansprüche 1 bis 8, bei welchem
zu läuternde Brauflüssigkeit einer Filtrationseinrichtung, insbesondere einem Aufnahmebehälter (30) mit einem Sieb (39), zugeführt wird,
mit oder ohne Sedimentationspause ein Vorlauf an geläuterter Flüssigkeit durch das Sieb (39) entnommen wird, wobei eine Durchflussgeschwindigkeit durch das Sieb (39) mittels einer Drossel eingestellt wird,
der Vorlauf in einem Sammelbehälter (40) in diskreten Portionen gesammelt wird, wobei bei Erreichen einer vordefinierten Maximalbefüllung bzw. Minimalbefüllung des Sammelbehälters (40) eine Entleerung des Sammelbehälters (40) eingeleitet bzw. beendet wird und
entweder:
a. eine vordefinierte Anzahl der diskreten Portionen an Vorlauf in die Filtrationseinrichtung rückgeführt wird oder
b. basierend auf Informationen zum Trübegrad des Vorlaufs dieser bis zum Erreichen einer voreingestellten Trübung rückgeführt wird.

## Claims

1. Mobile brewing apparatus with
two receptacles (20, 30) for brewing liquids, which are interruptibly fluidically connected to one another, at least the first receptacle (20) having a heating device and the second receptacle (30) being provided with a screen (39),
**characterized in**
**that** a discrete collecting container (40) for filtered liquid from the screen (39) is connected downstream of the second second receptacle (30), which is fluidically connected to the second receiving container (30) via a line,
**that** a flow regulator is provided between the second receptacle (30) and the collecting container (40), by means of which a flow rate of liquid to the collecting container (40) can be adjusted and/or interrupted,
**that** the collecting container (40) is connected to a discharge line for liquid, via which liquid can be returned directly, i.e. past the first receiving container, from the collecting container (40) into a region of the second receptacle (30) connected upstream of the screen (39).

2. Mobile brewing apparatus according to claim 1,
**characterized in that**
the collecting container (40) is designed as a holding container.

3. Mobile brewing apparatus according to any one of claims 1 to 3,
**characterized in that**
the flow controller interacts with an optical sensor which is designed to detect turbidity of the filtered liquid and to adapt the flow rate of the flow controller to the degree of turbidity.

4. Mobile brewing apparatus according to any one of claims 1 to 3, **characterized in that**
the collection container (40) has a sensor device which detects a minimum level and/or a maximum level of liquid in the collection container (40).

5. Mobile brewing apparatus according to any one of claims 1 to 4, **characterized in that**
a pump (60) is operatively connected to the collecting container (40) and is provided to discharge liquid from the collecting container and to supply it to the second receiving container.

6. Mobile brewing apparatus according to any one of claims 1 to 5, **characterized in that**
a feed device is provided for the second receptacle (30), by means of which liquid can be fed to the second receptacle (30) in a cyclone-forming manner.

7. Mobile brewing apparatus according to any one of claims 1 to 6, **characterized in that**
the collecting container (40) has pressure equalization means which counteract the formation of negative pressure when liquid is discharged from the collecting container (40).

8. Mobile brewing apparatus according to claim 1,
**characterized in that**
the collecting container (40) has a larger volume than the line (e) connecting the collecting container (40) to the second receptacle (30).

9. Method for automated provision of a filtration quality in a lautering process, by means of an apparatus according to any one of claims 1 to 8, in which the brewing liquid to be lautered is fed to a filtration device, in particular a receptacle (30) with a screen (39),
with or without a sedimentation pause, an initial flow of clarified liquid is taken through the sieve (39), a flow rate through the sieve (39) being adjusted by means of a throttle,
the flow is collected in discrete portions in a collecting container (40), wherein emptying of the collecting container (40) is initiated or terminated when a predefined maximum filling or minimum filling of the collecting container (40) is reached, and
either:
a. a predefined number of the discrete portions of feed is returned to the filtration device, or
b. based on information on the turbidity level of the feed, this is recirculated until a preset turbidity is reached.

## Revendications

1. Installation de brassage mobile avec deux réceptacles (20,30) pour les liquides de brassage reliés entre eux à titre interruptible en communication fluidique où au minimum le premier réceptacle (20) présente un dispositif de chauffage et le deuxième réceptacle (30) est tenu disponible avec un tamis (39) est caractérisée de sorte qu'un réservoir collecteur (40) discret pour le liquide filtré du tamis (39) est en aval avec le deuxième réceptacle (30) relié au deuxième réceptacle (30) par une conduite en communication fluidique, qu'un régulateur de débit est tenu disponible entre le deuxième réceptacle (30) et le réservoir collecteur (40) par le biais duquel une vitesse d'afflux du liquide est ajustable et/ou interruptible au réservoir collecteur (40) et que le réservoir collecteur (40) est relié à une conduite d'évacuation pour le liquide via laquelle directement, donc passant par le premier réceptacle, le liquide du réservoir collecteur (40) est traçable dans une zone en amont du tamis (39) du deuxième réceptacle (30).

2. Installation de brassage mobile selon la revendication 1 est caractérisée de sorte que le réservoir collecteur (40) est conçu en tant que conteneur dérivé.

3. Installation de brassage mobile selon l'une des revendications 1 jusqu'à 3 est caractérisée de sorte que le régulateur de débit coopère avec un capteur optique conçu pour constater une turbidité du liquide filtré et pour adapter la vitesse d'écoulement du régulateur de débit au degré de turbidité.

4. Installation de brassage mobile selon l'une des revendications 1 jusqu'à 3 est caractérisée de sorte que le réservoir collecteur (40) présente un dispositif capteur comptabilisant une distance minimale et/ou une distance maximale du liquide dans le réservoir collecteur (40).

5. Installation de brassage mobile selon l'une des revendications 1 jusqu'à 4 est caractérisée de sorte qu'une pompe (60) est reliée fonctionnellement au réservoir collecteur (40) et est tenue disponible pour évacuer du liquide du réservoir collecteur et pour alimenter le deuxième réceptacle.

6. Installation de brassage mobile selon l'une des revendications 1 jusqu'à 5 est caractérisée de sorte qu'un dispositif d'alimentation est tenu disponible pour le deuxième réceptacle (30) par le biais duquel du liquide cyclonique peut être amené vers le deuxième réceptacle (30).

7. Installation de brassage mobile selon l'une des revendications 1 jusqu'à 6 est caractérisée de sorte que le réservoir collecteur (40) présente des moyens de compensation de la pression antagonisant la création d'un vide lors de l'évacuation du liquide du réservoir collecteur (40).

8. Installation de brassage mobile selon la revendication 1 est caractérisée de sorte que le réservoir collecteur (40) présente un plus grand volume que la conduite (e) reliant le réservoir collecteur (40) au deuxième réceptacle (30).

9. Procédé pour la mise en place automatique d'un facteur de qualité de la filtration dans un processus de purification par le biais d'un dispositif selon l'une des revendications 1 jusqu'à 8 où un liquide de brassage purificateur alimente le dispositif de filtration, en l'espèce un réceptacle (30) avec un tamis (39), y est prélevé avec ou sans une pause de sédimentation une mise en marche préliminaire d'un liquide purificateur à travers le tamis (39) où une vitesse d'écoulement est ajustée à travers le tamis (39) par le biais d'une inductance, la mise en marche préliminaire du réservoir collecteur (40) est collectée en portions discrètes où un vidange du réservoir collecteur (40) est déclenché ou le cas échéant terminé en atteignant une charge maximale ou le cas échéant une charge minimale prédéfinie du réservoir collecteur (40) et que soit :
a. Un nombre prédéfini des portions discrètes est recyclé lors de la mise en marche préliminaire ou
b. Est recyclé se basant sur des informations relatives au degré de turbidité de la mise en marche préliminaire jusqu'à l'obtention d'une turbidité préréglée.
